# EUROPEAN PATENT SPECIFICATION

(11) **EP 2 874 875 B1**
(45) Date of publication and mention of the grant of the patent: **07.03.2018**
(21) Application number: 13742690.4
(22) Date of filing: 19.07.2013
(51) Int. Cl.: B64D 5/00, B64C 39/02

(54) **UNMANNED AERIAL VEHICLE AND METHOD OF LAUNCHING**
UNBEMANNTES LUFTFAHRZEUG UND ABSCHUSSVERFAHREN DAFÜR
VÉHICULE AÉRIEN SANS PILOTE ET PROCÉDÉ DE LANCEMENT

(30) Priority: 20.07.2012 GB 201212922; 08.08.2012 US 201213569360
(43) Date of publication of application: 27.05.2015
(60) Divisional application: 17163476.9
(73) Proprietor: Astigan Limited, Southampton S015 1GA (GB)
(72) Inventor: ELSON, Andrew Charles, Somerset BA5 3HD (GB)
(74) Representative: Worthington, Richard Easton
(86) International application number: PCT/GB2013/051942
(87) International publication number: WO 2014/013268

(56) References cited:
- WO-A1-00/34122
- JP-A- 2003 090 699
- US-A1- 2006 278 757

## Description

### Technical Field

The present invention relates to a method of launching an unmanned aerial vehicle.

### Background

High-altitude, long endurance solar powered aircraft concepts have been proposed for some time. Such vehicles at this altitude provide significant potential benefits. For example wind strengths and turbulence levels are at a minimum between around 18,000m and 30,000m altitude. Additionally, this altitude range is above normal aviation authority certification needs, and large areas of the planet can be observed, with the distance to the horizon being over 500km. Such unmanned vehicles are therefore suitable for aerial surveys, surveillance and emergency communications in disaster recovery situations.

In 1974, AstroFlight built the first solar powered drone Sunrise I. The promising results of the 10m span, Sunrise I, led to the Sunrise II, with 4480 solar cells, theoretically capable of attaining a service ceiling of 23,000m. Sunrise II flew successfully, but broke up in flight at 7,000m due to a suspected aeroelastic problem.

In-flight breakup is thought to be caused by a gust-induced aeroelastic wing shape change, leading to a control system instability. The resulting pitch oscillation resulted in excessive speeds which caused failure of the wing covering.

NASA's High Altitude Solar (HALSOL) project in 1995 saw the flight of the Pathfinder, which reached an altitude of 13,000m. This was followed by the Pathfinder-Plus which reached 24,500m, with its 19% efficient silicon solar cells and a payload of 67 kg. Centurion followed with a wing span of 63m with 62,100 bi-fractal solar cells and a payload of up to 270 kg.

Under NASA's Environmental research Aircraft and Sensor Technology Program (1998 - 2003) the Centurion was modified to become Helios. The Helios prototype was designed as a proof of concept high-altitude unmanned aerial vehicle that could fly on long endurance environmental science or telecommunications relay missions lasting for weeks or months. Helios made use of 19% efficient silicon based solar cells on the upper wing and lithium batteries. Helios had a constant 2.4m chord and was assembled in six 12.5m sections with under wing pods at the juncture of each section. Helios reached an altitude of 29,000m on solar power. Payload was around 300 kg.

In 2005, AC propulsion developed the SoLong aircraft. With the energy storage advances made with Lithium ion batteries (220 WHr/ kg), SoLong was able to stay airborne for two half nights, starting with a charged battery at midnight and flying to midnight the next day. This initial 24 hour flight was followed a few months later with a full 48 hour flight.

The present inventor, together with QinetiQ built the Zephyr aircraft (Zephyr III) in 2002 in order to film a balloon altitude record attempt at 40,000m. QinetiQ went on with European funding to develop a ground launch system. In 2007, QinetiQ flew the Zephyr for 83 hours using both 25% efficient solar cells and 350 Whr/kg Lithium Solar batteries. Zephyr reached a record altitude of 29,000m in 2008. A payload of around 2.5 kg was carried.

The Zephyr holds the official endurance record for an unmanned aerial vehicle for its flight from 9 July to 23 July 2010, lasting 336 hours and 22 minutes (2 weeks /14 days). Record claims have been verified by the Fédération Aéronautique Internationale (FAI) for both duration and altitude. It beat the previous endurance record for unmanned flight by more than a factor of five.

However, these methods of launching an unmanned aerial vehicle at such altitudes involve a ground launching method, whereby the vehicle propels itself from ground level to the relatively calm stratospheric zone above 15-20,000m.

US 2006/0278757 discloses a method of launching an unmanned aerial vehicle which involves the vehicle being attached to a lighter-than-air carrier from below and does not involve a ground launching approach. Once at the desired altitude the vehicle remains attached to the carrier and begins to fly in an ever-increasingly horizontal attitude, using the carrier as an anchor around which it flies, until it is at a velocity where it is capable of independent flight, whereupon it is separated from the carrier to begin independent and sustained flight.

However it has been found that such a carrier must carry a significant additional mass, and therefore have a very high lifting force, in order to perform as such an anchor without it itself being moved by the vehicle. It is estimated that the carrier would need a lifting force five to fifteen times that of the weight of the vehicle. If the carrier is a balloon, then such a balloon would have to be very large, e.g. 30m in diameter for a small unmanned aerial vehicle of 75kg take-off weight.

WO 00/34122 discloses a method for transporting an aircraft into space by use of a lighter-than-air balloon. The delivery system is proposed as a replacement for conventional rockets and relates to payloads of around 5 tons.

JP 2000187081 discloses an aerial observation device with the launch method involving the use of a lighter-than-air balloon. The altitudes reached by the balloon are less than 7000m and the aircraft descends to 3000m before being capable of independent flight.

US 7,313,362 discloses a high altitude airborne craft which is lifted from the ground by a lighter-than-air balloon. The aircraft is disclosed as being lifted from the ground in a horizontal orientation.

JP 2003 090699 discloses a guided missile transported above a launching point by a balloon. At a predetermined altitude, the balloon is cut off. As the missile accelerates during descent, the missile transitions into a glided flight to reach the target.

An improved method of launching an unmanned aerial vehicle into high altitude zones would therefore be highly desirable.

### Summary of Invention

In a first aspect, the present invention relates to a method of launching a powered unmanned aerial vehicle at an elevated altitude, the vehicle having wings, the method comprising lifting the vehicle by attachment to a lighter-than-air carrier from a substantially ground-level location to an elevated altitude, wherein the vehicle is prevented from entering its flight mode during ascent, and during lifting the vehicle is in a wing-tip-up orientation with the wings of the vehicle in a substantially vertical attitude, reorienting the vehicle at the elevated altitude from the substantially vertical attitude to a substantially horizontal attitude prior to detaching the vehicle from the lighter-than- air carrier, the vehicle thereafter decreasing in altitude as it accelerates to a velocity where it is capable of preventing any further descent and can begin independent sustained flight, characterised by detaching the vehicle from the carrier while the velocity of the vehicle relative to the carrier is substantially zero.

In second aspect, the invention relates to defining the unmanned aerial vehicle connected to the lighter-than-air carrier in the method of the first aspect, such that the ratio of the lifting force of the carrier to the weight of the vehicle is from 1.1:1 to 3:1, the vehicle, excluding payload, has a mass of from 30 to 150kg and the vehicle has a wingspan of from 20 to 60m.

The method of the invention lifts the unmanned aerial vehicle to an altitude above which the vehicle will reach its flight velocity at. While the vehicle is climbing, the vehicle is prevented from entering its flight mode, e.g. with its wings in a wing-tip-up orientation, i.e. wherein the wings are substantially vertically aligned. Once at a sufficient altitude, the vehicle is released in such a way that its resulting descent increases its air velocity and lift until such descent provides sufficient air velocity for sustained independent flight.

The elevated altitude is typically at least 1000m in altitude, but is ideally at least 13,000m in altitude. Preferably the elevated altitude is in the stratosphere. Typically the elevated altitude will be from 18,000 to 30,000m.

As there is no relative motion between the carrier and the vehicle, other than the minor relative motions induced by the very local atmospheric conditions, the carrier merely has to have sufficient lift to lift the vehicle to its launch altitude.

Thus, in a preferred embodiment of the method, the ratio of the lifting force of the carrier to the weight of the vehicle is from 1.2:1 to 2:1.

The substantially ground-level location is typically at or very near to the land or sea surface of the planet e.g. within 1,000 m, preferably within 100 m of a land or sea surface.

The unmanned vehicle is typically of the sort that resembles a glider, having at least two aerodynamic lifting surfaces, e.g. wings, a fuselage, a tail and at least one propeller powered by a motor and a power supply, although a wide variety of variations on this basic structure can be envisaged.

The method of the invention allows the vehicle to be designed for flight in the stratosphere, which is a considerably calmer region of the atmosphere as compared to the troposphere below. This is because the vehicle can begin its flight and remain in the stratosphere, as it is carried upwards by the carrier through key risk areas of the high wind loads introduced at 4,500m to 10,500m.

This results in the removal of a number of significant design constraints, which would otherwise need to be present if the vehicle had to fly itself to such altitudes. Thus, the vehicle can be lighter and more fragile than would be possible for a ground-launched vehicle.

For example, it is well-known that wind loadings are proportional to ρu² where ρ is the air density and u is the air velocity. At 20,000m altitude the air density is about one-fifth that at 12,000m, and the typical peak mean and eddy velocities are around one-half to one-third. Thus, dynamic wind loadings at 12,000m are around 20 to 40 times those in the tropopause or stratosphere.

As the vehicle is typically optimized for stratospheric flight, the vehicle does not need to travel through such a range of air densities. This can result in a simpler design, for example doing away with heavy gearing systems for propellers needed for a ground-launched vehicle. This therefore results in a greater weight available for functional payload equipment.

Thus, the vehicle is of very low weight such that the vehicle excluding payload is from 30 to 150kg, preferably from 30 to 100kg. Such vehicles can carry payloads that are a significant proportion of the overall weight of the vehicle, such as 15 to 100kg payloads.

The cord length of the wings is preferably in the range of from 1 to 3m, with 1.5 to 2.5 being typical. Thus, the surface area of the wings on their upper face is generally from 50 to 150 m², preferably from 70 to 120 m².

One way of characterizing the large wing area in relation to the weight of the vehicle is to use the upper surface wing surface area in relation to the weight of the vehicle excluding payload.

Thus, typically the vehicle will have an upper wing surface area to weight ratio of from 0.5 to 2.0 m²/kg, preferably from 1.0 to 2.0 m²/kg.

For example, one exemplary vehicle has a wingspan of 30m with a cord length of 2.5m, giving an upper wing surface area of 75m². The weight of the vehicle is 50kg. Thus the upper wing surface area to weight ratio is 1.5m²/kg.

Additionally, as the weight of the vehicle is so low, the volume of a lighter-than-air balloon required to lift the vehicle becomes correspondingly smaller, resulting in reduced costs and better handling. At ground level 1m³ of helium is capable of lifting approximately 1kg of vehicle. However at an altitude of 26,000m, a 1m³ balloon is capable of lifting 0.1kg. Thus, by having such a high launch altitude the lifting capacity of a lighter-than-air balloon can reduce by an order of magnitude during the ascent.

Thus, a balloon with 500m³ of helium is capable of lifting 50kg at 26,000m altitude. Thus, even with a lightweight vehicle of 50kg, a balloon of 500m³ volume is required to lift it to 26,000m.

It can therefore be seen that the weight of the vehicle is a significant constraint, and heavier vehicles in excess of 200kg are impractical to launch at such high altitudes as in the present invention.

The total weight of the vehicle may be comprised of greater than 30% payload, preferably greater than 40% payload and more preferably greater than 50% payload.

Payload is items carried by the vehicle which do not contribute directly to the flight of the vehicle, e.g. are not involved in providing lift, structure or propulsion. Payload therefore includes solar collectors, batteries and other functional equipment such as cameras, receivers, transmitters, navigational systems, antennas etc. carried by the vehicle. In case of doubt, an item is considered to be payload if it can be removed without compromising the ability of the vehicle to fly.

The vehicle may be attached to the lighter-than-air carrier by a wide variety of methods. One preferred method is to attach the vehicle to the carrier by one or more tethers. Such tethers can be lengthened or shortened as necessary to adjust the orientation of the vehicle. For example tethers may be attached to the fuselage and at one or both wings. Such tethers can be lengthened or shortened according to known methods, such as by paying in/out from a reel. Methods of lengthening such tethers includes a breakable tie holding a loop or multiple loops in the tether. Instead of lengthening or shortening a tether a redundant tether could be included which only supports weight of the vehicle when another tether is severed, for example.

It has been found that, as the vehicle is typically optimized for stratospheric flight and has a large wingspan in relation to its weight, care must be taken during launch.

However at the moment of launch from the ground, it can be inconvenient to launch the vehicle in a wing-tip-up orientation due to the potentially large wingspan. Thus, in a preferred embodiment of the method, the vehicle leaves the ground in a tail-up orientation. This is where the tail is pointing upwards and the wings extend substantially horizontally. For example, the vehicle can be put into a tail-up orientation by use of rolling aids under the fuselage.

In some cases however, such a vehicle can be so fragile that ground-level winds can provide sufficient force on the wings that the vehicle can mechanically fail under the ground level wind loads. Thus, the inventor has developed a ground-level launch housing for the vehicle wherein the housing is not rigidly connected to the ground.

Such a housing is designed to allow the vehicle to slide across the ground in the event of an high wind before launch. Thus, the energy imparted by the winds causes the vehicle and housing to slide along the ground rather than being absorbed by the vehicle structure. In a preferred embodiment the housing contains a slot for receiving the vehicle, preferably in a tail-up orientation, so that the nose of the vehicle is positioned in the housing. The housing is typically of very low material density, e.g. less than 50kg/m³. For example, it may be manufactured from a foam, such as polystyrene, or could be an inflatable housing.

At the moment of launch, the lighter-than-air carrier is released and begins to lift the vehicle from the ground.

Once the ground launch has occurred, care must be taken that the vehicle does not prematurely enter its flight mode, even without any powered motors, during ascent, when the local wind speeds can be sufficient to induce premature flight conditions.

The inventor has made the insight that, as the vehicle is carried upwards by a lighter-than-air carrier, it will generally be carried along with lateral winds. Thus, the local wind direction experienced by the vehicle during ascent will be almost entirely vertically downwards.

It has been found that arranging for the vehicle to ascend in a wing-tip-up orientation i.e. where the wings of the vehicle are substantially vertically aligned, minimizes the tendency of the vehicle to enter a flight mode, as the local wind direction will be along the wingspan, from wing-tip to wing-tip, and thus not activating the lift which the wings can provide. Alternatively, or additionally, control systems could be introduced to prevent such premature flight.

Thus, once the vehicle has left the ground, the vehicle enters a wing-tip-up orientation if it is not already in that orientation, preferably in the vicinity of the ground, e.g. within 1000m or preferably within 500m, or more preferably within 200m of the substantially ground-level location.

Furthermore, this method of ascension of the vehicle allows it to be lifted at an increased rate. Thus the vehicle is typically able to climb at a rate of from 1 to 10 m/s, preferably from 1.5 to 8 m/s.

Prior to the moment of release the carrier supports the weight of the vehicle, whose velocity is substantially zero relative to the carrier. This means that the vehicle is not performing any powered motion relative to the carrier during the moment of release. Clearly there may be some relative motion due to local atmospheric conditions, but this is not considered to be relative motion between the vehicle and carrier.

Prior to the moment of release the vehicle is typically tipped forward to a nose-down pitch with wings approximately level, so that at the moment of detachment, the vehicle descends in a gliding manner, while increasing its air speed in a controlled manner.

Typically the powered motors of the vehicle are only started after the detachment occurs, although they could be started shortly before detachment, provided this induces substantially no relative motion between the vehicle and carrier.

Typically the vehicle is solar-powered, comprising solar energy collectors and batteries for storing solar energy. The vehicle is also typically of the long-endurance type, capable of independent flight for extended periods, such as days, weeks, months or even years.

The invention will now be illustrated, by way of example, and with reference to the following drawings, in which:
Figure 1 is a schematic representation of the stages involved in carrying out the method of the present invention.
Figure 2 is a schematic representation of a preferred ground launch method according to the present invention.
Figure 3 is a schematic representation of a further preferred ground launch method according to the present invention.
Figure 4 is a schematic representation of another launch method according to the present invention.

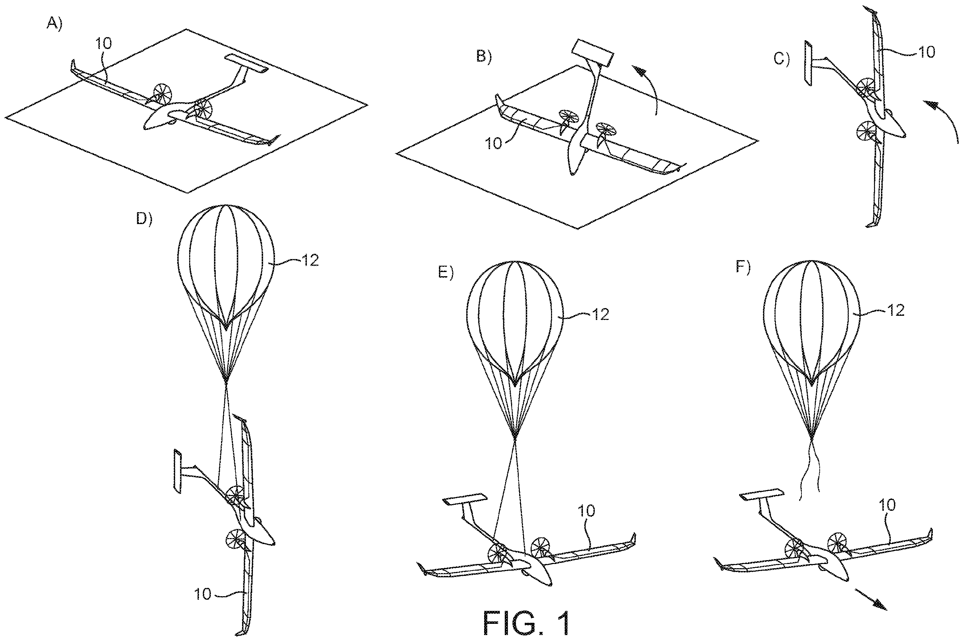

Turning to the figures, figure 1 shows an unmanned aerial vehicle 10 attached to a lighter-than-air balloon 12 acting as the carrier. At stage A the vehicle 10 is at rest at a ground-level location in a horizontal position flat to the ground. The vehicle is then tipped forwards to obtain a tail-up orientation at stage B. This may be carried out by the use of tethers (not shown) attached to the vehicle.

The balloon 12 is released and lifts the vehicle up from the ground initially in its tail-up orientation. However, shortly after the ascent begins, the vehicle 10 is maneuvered into a wing-tip-up orientation, as shown in stages C and D.

As the balloon is carried along with any lateral winds, the local wind velocity experienced by the vehicle is vertically along the wingspan. The balloon and vehicle continue to ascend to a launch altitude typically of from 18,000m to 30,000m.

Once at the launch altitude, the vehicle 10 is reoriented back into a horizontal position, as shown in stage E. There is a possible extra stage where the vehicle is further tipped forwards into a nose-down orientation.

When it is desired to launch the vehicle, it is released from the balloon 12, whereupon it glides away from the balloon and accelerates due to the fall in altitude. Once the glider has reached a sufficient velocity, its engines are started and it is capable of long-endurance powered flight.

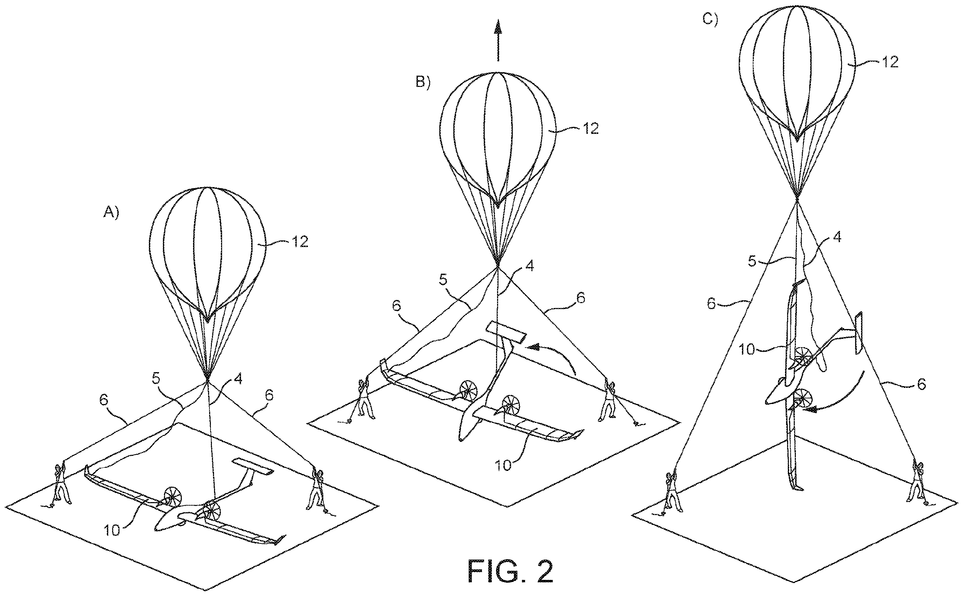

Figure 2 shows the ground launch stages in greater detail. Initially, the vehicle 10 is at rest at a ground-level location in a horizontal position flat to the ground. The vehicle 10 is attached to balloon 12 by tethers 4, 5 attached to the fuselage and a wing-tip respectively. Tether 4 is attached at a point on the fuselage which is approximately the centre of mass of the vehicle 10. Initially, tether 5 attached to the wing-tip is not under tension.

The balloon 12 is tethered to the ground by tethers 6. When it is desired to launch the vehicle 10 the vehicle enters a tail-up orientation, as shown in stage B. Thereafter the tethers 6 are extended to allow the balloon 12 to rise. As vehicle 10 is attached to balloon 12 by tether 4, the vehicle 10 also rises.

Shortly after leaving the ground tether 5 is shortened until it causes the wing of the vehicle to which tether 5 is attached to tip upwards. Tether 5 is shortened further until the vehicle is completely tipped onto its side as shown in stage C. At this stage, the weight of the vehicle is supported entirely by tether 5 and thus, tether 4 is no longer in tension.

The vehicle then ascends in this position, until it reaches launch altitude.

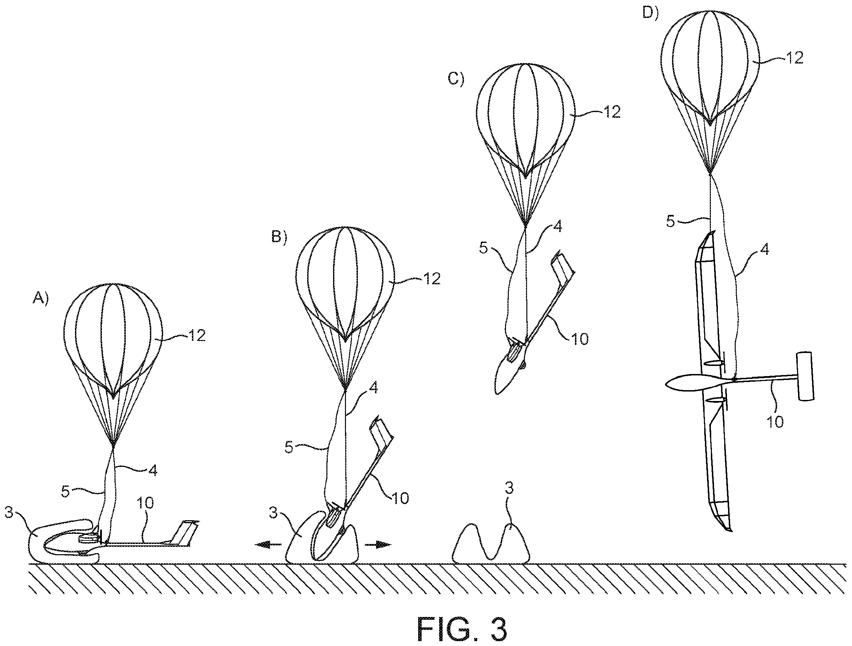

Figure 3 shows in greater detail how the ground launch is carried out. Initially, the vehicle 10 is at rest at a ground-level location in a horizontal position flat to the ground. The wings and nose of the vehicle are placed in an inflatable housing 3, which is initially shown deflated in stage A.

When it is desired to launch the vehicle 10, the inflatable housing 3 is inflated. In view of the shape of the housing, the vehicle enters a tail-up orientation as the housing 3 inflates, as shown in stage B.

Once in this position, in the event that any ground level winds occur, the vehicle 10 and housing 3 simply slide along the ground. Thus the vehicle wings do not resist the wind and instead they yield to it, greatly reducing any stresses induces in the vehicle structure and greatly reducing or eliminating the chance that a wind may damage the vehicle.

The balloon 12 is subsequently released from the ground and the vehicle is lifted out of housing 3 in its tail-up orientation.

Shortly after leaving the ground tether 5 is shortened until it causes the wing of the vehicle to which tether 5 is attached to tip upwards. Tether 5 is shortened further until the vehicle is completely tipped onto its side as shown in stage D. At this stage, the weight of the vehicle is supported entirely by tether 5 and thus, tether 4 is no longer in tension.

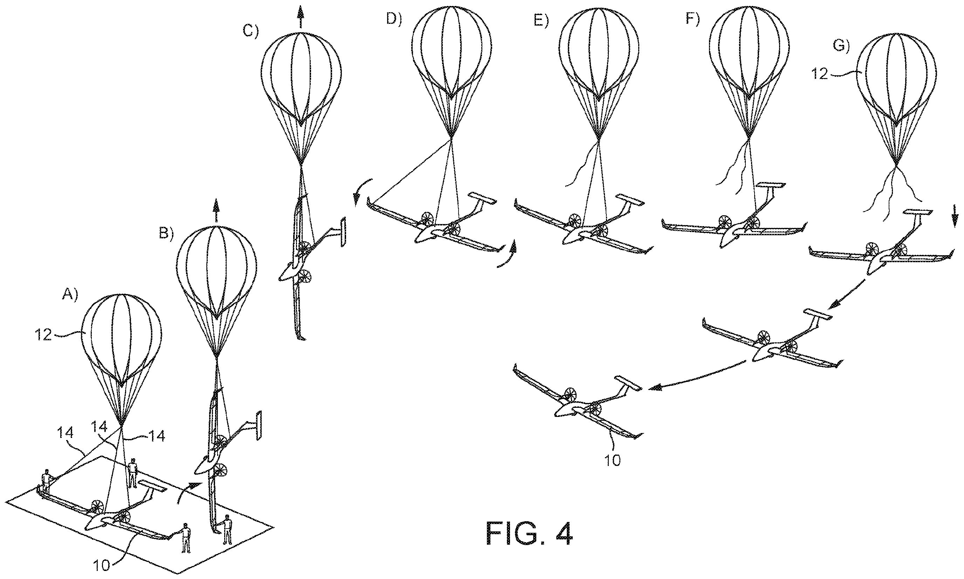

Figure 4 shows an unmanned aerial vehicle 10 attached to a lighter-than-air balloon 12 acting as the carrier at a ground level location at stage A. The vehicle 10 is attached to the balloon by three cords 14, one attached to a wing-tip and two attached to the fuselage.

During launch, the balloon 12 lifts and the vehicle 10 enters a wing-tip-up orientation, as shown in stage B, achieved by pulling on the cord attached to the wing-tip.

The balloon 12 then begins the ascent, carrying the vehicle 10 suspended below in its wing-tip-up orientation, as shown in stage C.

Once at the launch altitude the vehicle is moved back into a horizontal attitude by letting out the cord attached to its wing-tip, as shown in stage D.

The cord attached to the wing-tip is then severed, together with one of the cords attached to the fuselage, causing the vehicle 10 to enter a nose-down configuration, as shown in stage E and F.

Finally the last cord is severed, releasing the vehicle to begin its descent, as shown in stage G. The motors are powered and the vehicle increases its flight velocity until it can control its descent and is capable of independent flight.

## Claims

1. A method of launching a powered unmanned aerial vehicle (10) at an elevated altitude, the vehicle having wings, the method comprising lifting the vehicle by attachment to a lighter-than-air carrier (12) from a substantially ground-level location to an elevated altitude, wherein the vehicle is prevented from entering its flight mode during ascent, and during lifting the vehicle is in a wing-tip-up orientation with the wings of the vehicle in a substantially vertical attitude, reorienting the vehicle at the elevated altitude from the substantially vertical attitude to a substantially horizontal attitude prior to detaching the vehicle from the lighter-than- air carrier, the vehicle thereafter decreasing in altitude as it accelerates to a velocity where it is capable of preventing any further descent and can begin independent sustained flight, **characterised by** detaching the vehicle from the carrier while the velocity of the vehicle relative to the carrier is substantially zero.

2. A method according to claim 1, wherein the wings of the vehicle are substantially vertically aligned during substantially all of the ascent.

3. The method according to claim 1 or claim 2, wherein the vehicle (10) leaves the substantially ground-level location in a tail-up orientation.

4. The method according to any one of the preceding claims, wherein the vehicle is mounted at the substantially ground-level location in a launch housing (3) for the vehicle, wherein the housing is not rigidly connected to the ground.

5. The method according to claim 4, wherein the housing has a density of less than 50kg/m³.

6. The method according to any one of the preceding claims, wherein the vehicle climbs at a rate of from 1 to 10 m/s, preferably from 1.5 to 8 m/s.

7. The method according to any one of the preceding claims, wherein the powered motors of the vehicle are only started after the detachment occurs.

8. The method according to any one of the preceding claims, wherein, at the moment of release the vehicle is tipped forward to a nose-down pitch.

9. The method according to any one of the preceding claims, wherein the elevated altitude is from 18,000m to 30,000m.

10. The method according to any of claims 1 to 9, wherein the ratio of the lifting force of the carrier to the weight of the vehicle is from 1.1:1 to 3:1, the vehicle, excluding payload, has a mass of from 30 to 150kg and the vehicle has a wingspan of from 20 to 60m.

11. The method according to claim 10, wherein the total weight of the vehicle is comprised of greater than 30% payload, preferably greater than 40% payload and more preferably greater than 50% payload.

12. The method according to any one of claims 10 or 11, wherein the vehicle, excluding payload, has a mass of from 30 to 100kg.

13. The method according to any one of claims 10 to 12, wherein the vehicle comprises at least two wings, a fuselage, a tail and at least one propeller powered by a motor and a power supply.

14. The method according to any one of claims 10 to 13, wherein the vehicle is attached to the carrier via at least one tether (4, 5, 6, 14).

## Patentansprüche

1. Verfahren zum Starten eines angetriebenen unbemannten Luftfahrzeugs (10) in einer größeren Höhe, wobei das Luftfahrzeug Flügel aufweist und wobei das Verfahren umfasst: das Bewegen des Luftfahrzeugs von einer im Wesentlichen in Bodenhöhe liegenden Stelle nach oben in eine größere Höhe durch eine Befestigung an einem Trägerluftschiff (12), wobei verhindert wird, dass das Luftfahrzeug während des Anstiegs in seinen Flugmodus eintritt, und wobei sich das Fahrzeug, während es nach oben bewegt wird, in einer Orientierung befindet, in der die Spitze des Flügels nach oben zeigt und die Flügel des Fahrzeugs im Wesentlichen eine vertikale Stellung einnehmen, das Umorientieren des Fahrzeugs von der im Wesentlichen vertikalen Stellung in eine im Wesentlichen horizontale Stellung in der größeren Höhe und vor dem Loslösen des Fahrzeugs von dem Trägerluftschiff, wobei das Fahrzeug anschließend die Höhe verringert, während es auf eine Geschwindigkeit beschleunigt, bei welcher das Fahrzeug jeden weiteren Abstieg verhindert und einen unabhängigen stabilen Flug beginnen kann, **gekennzeichnet durch** das Loslösen des Fahrzeugs von dem Trägerluftschiff, während die Geschwindigkeit des Fahrzeugs relativ zu dem Trägerluftschiff im Wesentlichen Null beträgt.

2. Verfahren nach Anspruch 1, wobei die Flügel des Fahrzeugs im Wesentlichen während des gesamten Anstiegs im Wesentlichen vertikal ausgerichtet sind.

3. Verfahren nach Anspruch 1 oder Anspruch 2, wobei das Fahrzeug (10) die im Wesentlichen in Bodennähe liegende Stelle verlässt, während das Heck nach oben orientiert ist.

4. Verfahren nach einem der vorhergehenden Ansprüche, wobei das Fahrzeug an der im Wesentlichen in Bodennähe liegenden Stelle in einem Startgehäuse (3) für das Fahrzeug montiert ist, wobei das Gehäuse mit dem Boden nicht starr verbunden ist.

5. Verfahren nach Anspruch 4, wobei das Gehäuse eine Massedichte von weniger als 50 kg/m³ aufweist.

6. Verfahren nach einem der vorhergehenden Ansprüche, wobei das Fahrzeug mit einer Geschwindigkeit von 1 bis 10 m/s, vorzugsweise von 1,5 bis 8 m/s, steigt.

7. Verfahren nach einem der vorhergehenden Ansprüche, wobei die angetriebenen Motoren des Fahrzeugs erst nach dem Loslösen gestartet werden.

8. Verfahren nach einem der vorhergehenden Ansprüche, wobei das Fahrzeug im Moment der Freigabe nach vorne gekippt wird in eine Neigung der Nase nach unten.

9. Verfahren nach einem der vorhergehenden Ansprüche, wobei die größere Höhe von 18,000 m bis 30,000 m reicht.

10. Verfahren nach einem der Ansprüche 1 bis 9, wobei das Verhältnis der Hubkraft des Trägerluftschiffs zu dem Gewicht des Fahrzeug von 1,1:1 bis 3:1 reicht, wobei das Fahrzeug ausschließlich der Traglast eine Masse von 30 bis 150 kg aufweist und wobei das Fahrzeug eine Flügelspannweite von 20 bis 60 m hat.

11. Verfahren nach Anspruch 10, wobei das Gesamtgewicht des Fahrzeugs mehr als 30% Nutzlast, vorzugsweise mehr als 40% Nutzlast und weiter vorzugsweise mehr als 50% Nutzlast umfasst.

12. Verfahren nach einem der Ansprüche 10 oder 11, wobei das Fahrzeug ausschließlich Nutzlast eine Masse von 30 bis 100 kg aufweist.

13. Verfahren nach einem der Ansprüche 10 bis 12, wobei das Fahrzeug mindestens zwei Flügel, einen Rumpf, ein Heck und mindestens einen durch einen Motor und eine Energieversorgung angetriebenen Propeller aufweist.

14. Verfahren nach einem der Ansprüche 10 bis 13, wobei das Fahrzeug über mindestens ein Halteseil (4, 5, 6,14) an dem Trägerluftschiff befestigt ist.

## Revendications

1. Procédé de lancement d'un véhicule aérien sans pilote motorisé (10) à une altitude élevée, ce véhicule ayant des ailes, ce procédé comprenant des étapes consistant à :
faire monter le véhicule en le fixant à un porteur (12) plus léger que l'air à partir d'un emplacement situé essentiellement au niveau du sol jusqu'à une altitude élevée, le véhicule étant empêché d'entrer dans son mode de vol au cours de cette ascension, et au cours de sa montée, le véhicule étant orienté bout d'une aile en haut, les ailes du véhicule étant essentiellement verticales, réorienter le véhicule au niveau de l'altitude élevée de la position essentiellement verticale à une position essentiellement horizontale avant de le détacher du porteur plus léger que l'air, le véhicule perdant ensuite de l'altitude en accélérant jusqu'à une vitesse à laquelle il est susceptible d'empêcher toute poursuite de la descente et peut entreprendre un vol de croisière indépendant,
**caractérisé en ce qu'**
il comprend une étape consistant à détacher le véhicule du porteur alors que sa vitesse par rapport au porteur est essentiellement nulle.

2. Procédé conforme à la revendication 1,
selon lequel les ailes du véhicule sont essentiellement alignées verticalement au cours d'essentiellement la totalité de l'ascension.

3. Procédé conforme à la revendication 1 ou 2,
selon lequel le véhicule (10) quitte l'emplacement situé essentiellement au niveau du sol en étant orienté queue en haut.

4. Procédé conforme à l'une quelconque des revendications précédentes,
selon lequel le véhicule est monté sur l'emplacement situé essentiellement au niveau du sol dans un caisson de lancement (3) du véhicule, ce caisson n'étant pas relié solidairement au sol.

5. Procédé conforme à la revendication 4,
selon lequel le caisson a une densité inférieure à 50 kg/m³.

6. Procédé conforme à l'une quelconque des revendications précédentes,
selon lequel le véhicule monte à une vitesse de 1 à 10m/s de préférence de 1,5 à 8 m/s.

7. Procédé conforme à l'une quelconque des revendications précédentes,
selon lequel les moteurs du véhicule ne sont démarrés qu'après le détachement de celui-ci.

8. Procédé conforme à l'une quelconque des revendications précédentes,
selon lequel au moment du détachement, le véhicule est arraché vers l'avant en piqué.

9. Procédé conforme à l'une quelconque des revendications précédentes,
selon lequel l'altitude élevée est comprise entre 18.000 m et 30.000 m.

10. Procédé conforme à l'une quelconque des revendications 1 à 9, selon lequel le rapport entre la force de levage du porteur et le poids du véhicule est compris entre 1,1 :1 et 3:1, le véhicule, ayant une masse de 30 à 150 kg, en excluant la charge utile et a une envergure de 20 à 60m.

11. Procédé conforme à la revendication 10,
selon lequel le poids total du véhicule est supérieur à 30% de la charge utile, de préférence supérieur à 40% de la charge utile et de façon plus préférentielle, supérieur à 50% de la charge utile.

12. Procédé conforme à l'une quelconque des revendications 10 à 11, selon lequel le véhicule, a une masse de 30 à 100 kg, en excluant la charge utile.

13. Procédé conforme à l'une quelconque des revendications 10 à 12, selon lequel le véhicule comporte au moins deux ailes, un fuselage, une queue, et au moins un propulseur alimenté en énergie par un moteur et une source d'alimentation en énergie.

14. Procédé conforme à l'une quelconque des revendications 10 à 13, selon lequel le véhicule est attaché au porteur par l'intermédiaire d'au moins une amarre (4, 5, 6, 14).
